# EUROPEAN PATENT APPLICATION

(11) **EP 2 667 240 A1**
(43) Date of publication of application: **27.11.2013**
(21) Application number: 13167824.5
(22) Date of filing: 15.05.2013
(51) Int. Cl.: G02B 27/22, G09G 3/00, H04N 13/04

(54) **Volumetric display using electrowetting mirror arrays**

(30) Priority: 22.05.2012 US 201213477660
(71) Applicant: Delphi Technologies, Inc., Troy, MI 48007 (US)
(72) Inventor: Kuhlman, Frederick F., Kokomo Indiana 46902 (US); Loong, Daniel Leong Woon, 822202 Singapore (SG); Parker, Richard D., Tipton Indiana 46072 (US)
(74) Representative: Robert, Vincent

(57) **Abstract**

A volumetric display (10) that includes a dispersion block (12) defining a plurality of voxels (18) that are characterized as being visibly apparent when illuminated by impinging light, a projector (20) configured to project one or more light rays (16) for illuminating one or more of the plurality of voxels (18), and a plurality of arrays (22) of electrowetting mirrors (24) arranged about the dispersion block (12), wherein each electrowetting mirror is operable to reflect a light ray (16a) from the projector (20) toward a selected voxel (26). The arrays (22) of electrowetting mirrors (24a1) provide for a volumetric display (10) that is readily focused.

## Description

### TECHNICAL FIELD

This disclosure generally relates to volumetric displays, and more particularly relates to a volumetric display that uses multiple arrays of electrowetting mirrors to direct light rays from a projector into a dispersion block.

### BACKGROUND OF THE INVENTION

Several varieties of three dimensional (3D) volumetric displays have been demonstrated that do not require a person viewing the display to wear glasses or limit head movements. However, many of these displays rely in spinning mirrors or projecting as many as three hundred sixty distinct images to display a volumetric image. What is needed is a simpler volumetric display.

### SUMMARY OF THE INVENTION

In accordance with one embodiment, a volumetric display is provided. The volumetric display includes a dispersion block, a projector, and a plurality of arrays of electrowetting mirrors. The dispersion block is configured to define a plurality of voxels characterized as being visibly apparent when illuminated by impinging light. The projector is configured to project one or more light rays for illuminating one or more of the plurality of voxels. The plurality of arrays of electrowetting mirrors are arranged about the dispersion block. Each electrowetting mirror is operable to reflect a light ray from the projector toward a selected voxel.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:

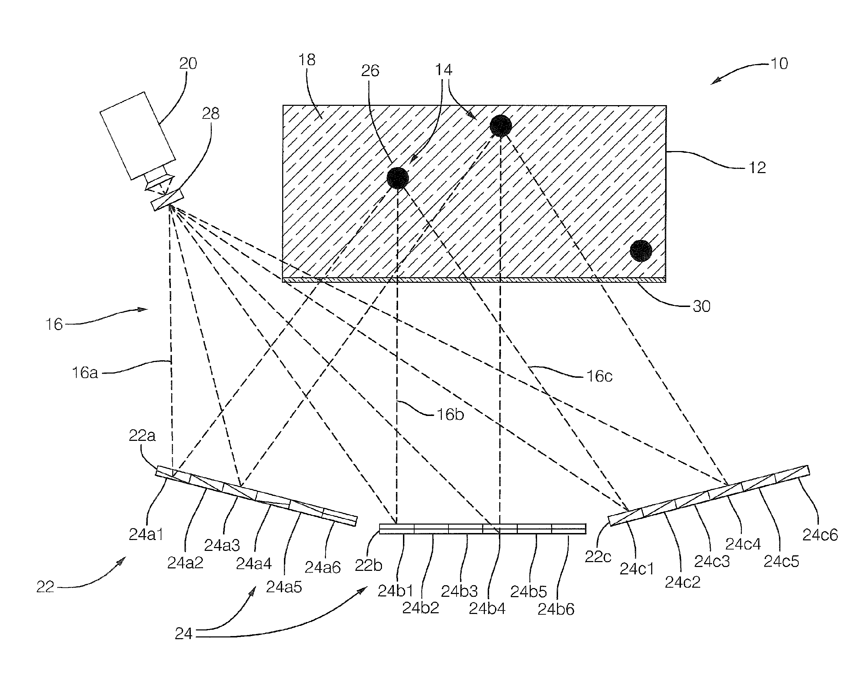

Fig. 1 is a side view of a volumetric display in accordance with one embodiment.

### DESCRIPTION OF THE PREFERRED EMBODIMENT

Fig. 1 illustrates a non-limiting example of a volumetric display, hereafter the display 10. As used herein, a volumetric display creates a 3D image that can be viewed from essentially an infinite number of directions, and so a person viewing a volumetric display can move incrementally up and down as well as left and right, and the perspective of the image will change just as it would if the image were a real object residing within the display. This is not to say that there are no limits on the direction that an image can be viewed from, only that the display 10 does not display an image that suffers from inherent limitations as some displays, for example autostereoscopic type displays. Therefore, as used herein, a volumetric display is not a type of display that relies on autostereoscopic images being projected towards the eyes of the person viewing the volumetric display, and so autostereoscopic type displays are specifically excluded and not comparable to the display 10 described herein.

The display 10 generally includes a dispersion block 12, sometimes known as a volumetric diffuser, in which an image 14 appears when properly directed light rays 16 are projected into the dispersion block 12. In general, the dispersion block 12 defines a plurality of voxels that typically become visibly apparent when illuminated by impinging light. An example of the display 10 described herein was demonstrated using a volumetric diffuser that included a transparent container formed of glass to define the dispersion block 12. The transparent container was filled with a solution or mixture of food grade powdered cornstarch suspended in water. However, other suitable materials are contemplated for making the dispersion block 12, such as Aerogel™ available from BuyAerogel.com. Another suitable dispersion block may be formed by laser etching a pattern of diffusion locations within a volume of glass. Such a volumetric diffuser may be provided by Crystal Moments Pte. Ltd., Website: http://search.insing.com/website/3e800200?linkNo=0, Retail branch: VivoCity, #02-83A, 1 HarbourFront Walk, Singapore 098585, or Sentosa Cable Car Station Shop, 42 Imbiah Road, Singapore 099701

The display 10 generally also includes a projector 20 configured to project one or more of the light rays 16 for illuminating one or more of the voxels 18 in the dispersion block 12. As suggested by Fig. 1 and will become apparent in the description that follows, when a plurality of the light rays 16 converge or intersect at a particular voxel, i.e. a particular location within the dispersion block 12, the particular voxel is illuminated more brightly than other voxels that are not illuminated with multiple light rays. A suitable device for the projector 20 is a raster laser projector from MicroVision, Inc., located in Redmond, Washington, USA.

The display 10 generally also includes a plurality of arrays 22a, 22b, 22c (hereafter often the arrays 22) of electrowetting mirrors 24a1, 24a2, 24a3, 24a4, 24a5, 24a6, 24b1-24b6, 24b1-24b6 (hereafter often the mirrors 24) arranged about the dispersion block 12. While Fig. 1 illustrates that each array 22a, 22b, 22c each have six mirrors, it should be understood that this is only for the purpose of simplifying the illustration, and that in practice the arrays would have hundreds to tens of thousands of mirrors in each array. Also, the arrays 22 are illustrated in a way that suggest the arrays 22 comprise a one-dimensional array of the mirrors 24, but it should be understood that the arrays 22 are typically two-dimensional arrays where each individual mirror could be likened to a pixel on a two-dimensional display. Furthermore, while Fig. 1 suggests that the arrays 22 are arranged about the dispersion block 12 in a two-dimensional manner, it is recognized that the arrays 24 may be preferably arranged about the dispersion block in a three-dimensional manner so that the light rays 16 impinge on the selected voxel 26 from as widely disparate angles as possible to minimize the effects of partially convergent light rays proximate to the selected voxel 26.

By way of example and not limitation, an electrowetting mirror may use Galinstan as the 'oil' layer in an electrowetting cell to provide a reflective surface that can be oriented or angled by applying voltages to the electrowetting cell. A suitable array of electrowetting mirrors is described in United States Patent Application serial number 13/071,925 by Kuhlman et al., titled DISPLAY USING A TRANSREFLECTIVE ELECTROWETTING LAYER, filed March 25, 2011, the entire contents of which are hereby incorporated by refernce herein. In general, each of the mirrors 24 is operable to reflect a light ray (16a, 16b, 16c) from the projector 20 toward a selected voxel 26 at a selected location in the dispersion block 12. Accordingly, the projector 20 and arrays 22 of mirrors 24 cooperate to intersect a plurality of light rays 16a, 16b, 16c at the selected voxel 26 so that the selected voxel 26 is more apparent than voxels illuminated by one of the light rays 16 as it passes through the dispersion block 12 toward the selected voxel 26.

The display 10 may also include an optical device 28 interposed between the projector 20 and the arrays 22. As the projector 20 may have a limited angular range of directions that the light rays 16 can be projected. As such, the optical device 28 is provided to direct the light rays 16 from the projector 20 to arrays 22. By way of example and not limitation, the optical device may include an electrowetting lens as shown in United States Patent Number 7,352,512 to Hendriks et al., titled VARIABLE FOCUS LENS, issued April 1, 2008. Alternatively, the optical device 28 may include a movable mirror, or a switchable mirror generally described as being operable to two states: transparent or reflective. For example, an LCD filled with crystals that are reflective in one state is available from Kentoptronics, or an electrowetting cell filled with liquid gallium, or an electrochromic mirror. A more detailed description of how to time-multiplex and direct images for displays can be found in United States Patent Application Serial Number 12/853,647 by Kuhlman et al., titled DUAL VIEW DISPLAY SYSTEM, filed August, 9, 2010, the entire contents of which are hereby incorporated by reference herein.

The display 10 may also include an anti-reflective coating 30 upon the dispersion block at least where light rays reflected by the arrays enter the dispersion block. The anti-reflective coating 30 may help to prevent or reduce a portion of the light rays 16 from reflecting off the dispersion block 12, thereby reducing the amount of light energy impinging on the selected voxel 26, and potentially reflecting toward a person viewing the display 10. A suitable anti-reflective film is Vikuiti ARMP-200 available from 3M corporation.

While Fig. 1 shows three arrays (22a, 22b, 22c), it is recognized that more arrays of electrowetting mirrors may be employed, and may be desirable as the more light rays that intersect or converge at the selected voxel 26, the more brightly illuminated an more apparent the selected voxel 26 will appear when compared to the voxels 18 that are illuminated by fewer of the light rays 16. It is also recognized that more than one of the mirrors 24 on a single array could be used to reflect a light ray to the selected voxel 26. Furthermore, while Fig. 1 only illustrates a few seemingly unrelated voxels being illuminated by the intersecting light rays, and some of the designated voxels within the dispersion block 12 are not illustrated as being illuminated by any intersecting light rays, it should be recognized that an image of an object or image of a shape can be illuminated within the dispersion block 12 by varying the light rays 16 output by the projector, and varying the reflection angle of the mirrors 24.

The light rays 16 projected by the projector may be determined based on a three-dimensional model of an object that is to be seen as the image 14 in the dispersion block 12. Then determining how many of light rays 16 are to intersect at the selected voxel may be based on how brightly the selected voxel 26 is to be illuminated. Selecting which of the mirrors 24 light rays are to impinge on, and determining the angle or orientation of the particular mirror so that the light ray impinges on the selected voxel 26 is a simple matter of geometry.

Accordingly, a volumetric display 10 using electrowetting mirror arrays 22 is provided. By using the arrays 22 to direct the light rays 16 toward a selected voxel 26, a volumetric display 10 is provided that uses a fixed diffusion media (the dispersion block 12), and is able to independently adjust the angle of reflection by each of the mirrors 24 forming each array (22a, 22b, 22c) for each individual light ray (16a, 16b, 16c). As such, the arrays 22 provide greater flexibility of reflection angles than is otherwise possible with fixed mirrors, and so is able provide for greater alignment of the light rays 16 into the dispersion block 12 to account for dimensional variations due to manufacturing tolerances and in-use vibration.

While this invention has been described in terms of the preferred embodiments thereof, it is not intended to be so limited, but rather only to the extent set forth in the claims that follow.

## Claims

1. A volumetric display (10) comprising:
a dispersion block (12) configured to define a plurality of voxels (18) characterized as being visibly apparent when illuminated by impinging light;
a projector (20) configured to project one or more light rays (16) for illuminating one or more of the plurality of voxels (18); and
a plurality of arrays (22) of electrowetting mirrors (24) arranged about the dispersion block (12), wherein each electrowetting mirror is operable to reflect a light ray (16a) from the projector (20) toward a selected voxel (26).

2. The display (10) in accordance with claim 1, wherein the projector (20) and arrays (22) cooperate to intersect a plurality of light rays (16) at the selected voxel (26) so that the selected voxel (26) is more apparent than voxels (18) illuminated by one light ray (16a, 16b, 16c).

3. The display (10) in accordance with anyone of claim 1 or 2, wherein said display (10) further comprises an optical device (28) interposed between the projector (20) and the plurality of arrays (22), said optical device (28) configured to direct the light rays (16) from the projector (20) to the plurality of arrays (22).

4. The display (10) in accordance with anyone of claims 1 to 3, wherein said dispersion block (12) includes an anti-reflective coating (30) upon the dispersion block (12) at least where light rays (16) reflected by the arrays (22) enter the dispersion block (12).
